# EUROPÄISCHE PATENTSCHRIFT

(11) **EP 4 036 377 B1**
(45) Veröffentlichungstag und Bekanntmachung des Hinweises auf die Patenterteilung: **07.06.2023**
(21) Anmeldenummer: 22162730.0
(22) Anmeldetag: 14.03.2018
(51) Int. Cl.: F01D 11/00, B22F 5/00, F16J 15/08, F16J 15/44, F16L 23/20, F16J 15/3236

(54) **DICHTUNGSKOMPONENTE, INSBESONDERE ZUR ABDICHTUNG EINES DAMPFRAUMES GEGENÜBER DER UMGEBUNG ODER ZWEIER DAMPFRÄUME MIT UNTERSCHIEDLICHEN DRÜCKEN SOWIE VERWENDUNG EINER SOLCHEN**
SEALING COMPONENT, IN PARTICULAR FOR SEALING A STEAM CHAMBER AGAINST THE ENVIRONMENT OR TWO STEAM CHAMBERS WITH DIFFERENT PRESSURES AND USE OF SUCH A COMPONENT
COMPOSANT D'ÉTANCHÉITÉ, EN PARTICULIER DESTINÉ À L'ÉTANCHÉIFICATION D'UN ESPACE À VAPEUR PAR RAPPORT À L'ENVIRONNEMENT OU DE DEUX ESPACES À VAPEUR À DES PRESSIONS DIFFÉRENTES, AINSI QU'UTILISATION D'UN TEL COMPOSANT

(30) Priorität: 10.04.2017 DE 102017206065
(43) Veröffentlichungstag der Anmeldung: 03.08.2022
(62) Teilanmeldung aus: 18714164.3
(73) Patentinhaber: Siemens Energy Global GmbH & Co. KG, 81739 München (DE)
(72) Erfinder: Bell, Ralf, 45478 Mülheim an der Ruhr (DE); Bergmann, Anett, 45527 Hattingen (DE); Bieniakonski, Christoph, 65189 Wiesbaden (DE); Busschulte, Marius, 46049 Oberhausen (DE); Ernst, Stephan, 46537 Dinslaken (DE); Kocdemir, Bora, 45357 Essen (DE); Legenbauer, Markus, 45279 Essen (DE); Maguire, Adam, 46147 Oberhausen (DE); Oehmichen, Michael, 45478 Mülheim an der Ruhr (DE); Ostwald, Daniel, 46047 Oberhausen (DE); Stanka, Ulrich, 45355 Essen (DE); Ulma, Andreas, 45481 Mülheim an der Ruhr (DE); van der Lest, Niclas, 42781 Haan (DE)

(56) Entgegenhaltungen:
- US-A1- 2005 206 097

## Beschreibung

Die Erfindung betrifft eine Dichtungskomponente, insbesondere zur Abdichtung eines Dampfraumes gegenüber der Umgebung oder zweier Dampfräume mit unterschiedlichen Drücken sowie die Verwendung einer solchen.

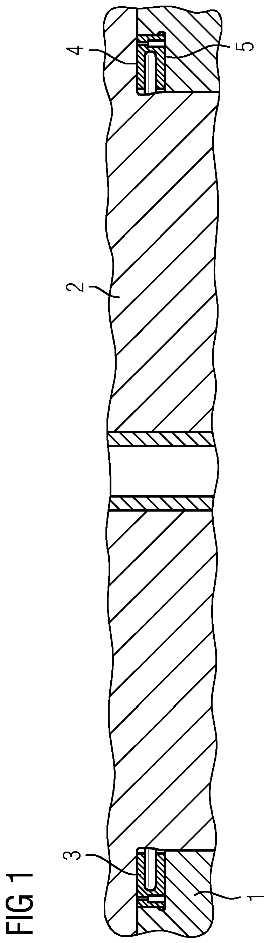

Der Anmelderin ist bekannt, dass zur Abdichtung von Dampfräumen mit unterschiedlichen Drücken oder auch zur Abdichtung eines Dampfraumes gegenüber der Umgebung Metallringe mit U-förmigem, nach innen hin offenen Querschnitt zum Einsatz kommen. Die Figur 1 zeigt exemplarisch einen Teilschnitt durch ein Ventil mit einem Ventilgehäuse 1, das von einem Deckel 2 verschlossen ist, wobei in einem zwischen dem Gehäuse 1 und dem Deckel 2 gebildeten ringförmigen Zwischenraum ein solcher Metallring 3 eingesetzt ist, um eine Abdichtung des Innenraums des Ventilgehäuses 1 gegenüber der Umgebung zu erzielen.

Mit derartigen U-Ringen sind vergleichsweise hohen Fertigungskosten und lange Beschaffungszeiten verbunden, die mitunter die Länge der Revisionszeiten überschreiten. Dies insbesondere, da für die U-Ringe ausschließlich Schmiedeteile verwendet werden. Die langen Beschaffungszeiten führen dazu, dass die U-Ringe unabhängig von der Befundung vorzeitig geordert und vorgehalten werden müssen. Es ist ferner eine Qualifizierung der Lieferanten erforderlich. Die U-Ringe müssen darüber hinaus in der Regel mit Aufmaß bereitgestellt und im Rahmen einer Revision individuell angepasst werden, was mit nicht unerheblichem Aufwand verbunden ist. Vor allem für Ringe mit großem Durchmesser werden dabei besondere Bearbeitungsmaschinen benötigt. Ein weiterer Nachteil besteht darin, dass die U-Ringe Kriechverformungen der Anlageufer, an denen sie mit ihren Stirnseiten anliegen, und die mitunter ungleichmäßig sind, nicht immer folgen können, was zu lokalen Leckagen, insbesondere bei transientem Betrieb, führen kann.

Andere Dichtungskomponenten sind z.B. bekannt aus der US 2005/0206097 A1.

Es ist daher eine Aufgabe der vorliegenden Erfindung, eine alternative Dichtungskomponente bereitzustellen, welche diese Nachteile vermeidet.

Diese Aufgabe wird gelöst durch eine Dichtungskomponente, insbesondere zur Abdichtung eines Dampfraumes gegenüber der Umgebung oder zweier Dampfräume mit unterschiedlichen Drücken, umfassend zumindest einen ring- oder ringsegmentförmigen, im Querschnitt zumindest im Wesentlichen U-förmigen Grundkörper, der zwei stirnseitige Wandungen und eine die beiden stirnseitigen Wandungen verbindende Mantelwandung aufweist, wobei innerhalb des Grundkörpers eine Stützstruktur vorgesehen ist, welche die beiden stirnseitigen Wandungen miteinander verbindet.

Der wenigstens eine Grundkörper bildet quasi den äußeren Mantel der Dichtungskomponente, welcher die Stützstruktur an beiden axialen Rändern und am äußeren Durchmesser umschließt und der Abgrenzung der Druckunterschiede dient. Dieser ist nach innen offen ausgebildet, entspricht also insbesondere einem Ring(segment)-förmigen Hohlkörper, der keine die innere Mantelfläche definierende Wandung aufweist. Es kann ein in Umfangsrichtung geschlossener, also ringförmigen Grundkörper vorgesehen sein oder eine Mehrzahl von Ringsegment-förmigen Grundkörpern, die dann bevorzugt zu einem Ring zusammengesetzt eine Dichtungsanordnung bilden.

Die Stützstruktur umfasst eine Vielzahl von insbesondere parallelen zylinderförmigen Stützelementen und/oder rohrförmigen Stützelementen. Dann weist die Stützstruktur eine Mehrzahl von Elementen auf, die sich durch eine zylinderförmige Außenkontur auszeichnen und entweder als Voll- oder Hohlkörper ausgebildet sind. Weist die Stützstruktur zylinderförmige und/oder rohrförmige Stützelemente auf, ist vorgesehen, dass das eine axiale Ende jedes zylinder- oder rohrförmigen Stützelementes mit der einen stirnseitigen Wandung und das andere axiale Ende des zylinder- oder rohrförmigen Stützelementes mit der anderen stirnseitigen Wandung des Grundkörpers bevorzugt integral verbunden ist.

Die tragenden Eigenschaften des Dichtungselementes übernimmt die in dem wenigstens einen Grundkörper erfindungsgemäß angeordnete Stützstruktur. Der Grundkörper kann sich daher durch deutlich geringere Wandungsstärken auszeichnen als die der Anmelderin bekannten U-Ringe ohne Stützstruktur und die stirnseitigen Wandungen des Grundkörpers können deutlich flexibler auch großen Kriechverformungen und/oder lokal variierenden Kriechverformungen im Bereich der Anlageufer folgen. Die Stützstruktur kann ferner im Betrieb aufgrund des Betriebsdruckes aufgeweitet werden und so einen zusätzlichen Dichteffekt bedingen.

Die erfindungsgemäß innerhalb des wenigstens einen ring- oder ringsegmentförmigen Grundkörpers angeordnete Stützstruktur kann beispielsweise waben- oder gitterförmig ausgebildet sein. In besonders bevorzugter Ausgestaltung erstreckt sich zumindest ein Teil der rohrförmigen und/oder zylinderförmigen Stützelemente, erstrecken sich insbesondere alle rohrförmigen und/oder zylinderförmigen Stützelemente zumindest im Wesentlichen in axialer Richtung des ring- oder ringsegmentförmigen Grundkörpers.

Weiterhin kann vorgesehen sein, dass sämtliche zylinder- oder rohrförmigen Stützelemente den gleichen Durchmesser und/oder die gleiche Länge und/oder - im Falle rohrförmiger Stützelemente - die gleiche Wandstärke aufweisen.

Bei dem erfindungsgemäßen Dichtungselement werden Steifigkeit und insbesondere Vorspannung der bekannten U-Ringe von der im Inneren des Grundkörpers angeordneten Stützstruktur übernommen. Die Stützstruktur kann beim Zusammenbau vorgespannt werden, wodurch ein zusätzlicher Dichteffekt bedingt wird. Die Kompression der Stützstruktur stellt dabei eine neuartige Möglichkeit der Vorspannung dar. Eine solche kann über ein Stauchen des erfindungsgemäßen Dichtungselementes, insbesondere durch Aufbringung axialer Kräfte von außen auf die beiden stirnseitigen Wandungen des Grundkörpers erreicht werden. Die Kompressionsfähigkeit der Stützstruktur kann beispielsweise über den Winkel beziehungsweise die Wandungsstärke von Elementen in der Stützstruktur, beispielsweise von die Waben oder Gitter definierenden Wandungen beziehungsweise den rohr- und/oder zylinderförmigen Stützelementen gesteuert werden. Je nach Einsatzbereich der erfindungsgemäßen Dichtungskomponenten kann auch eine Stützstruktur vorgesehen werden, die sich durch eine Steifigkeit auszeichnet, die eine für den Einsatzbereich zu große Vorspannung begrenzt.

Bevorzugt wird die erfindungsgemäße Dichtungskomponente derart verwendet, dass im Inneren des Grundkörpers, also dort wo die Stützstruktur angeordnet ist, ein höherer Druck vorherrscht als außenseitig des Grundkörpers. Im Betrieb wird dann insbesondere ein "Aufblähen" des Grundkörpers verursacht und die Dichtungswirkung noch begünstigt.

In besonders bevorzugter Ausgestaltung wird das erfindungsgemäße Dichtungselement gedruckt. Darunter ist zu verstehen, dass ein generatives bzw. additives Herstellungsverfahren, beispielsweises selektives Laserschmelzen (englisch: Selective Laser Melting - SLM) für die Herstellung der erfindungsgemäßen Dichtungskomponente zum Einsatz kommt. Als ganz besonders geeignet hat es sich erwiesen, wenn die erfindungsgemäße Dichtungskomponente durch selektives Laserschmelzen aus dem Pulverbett gefertigt wird.

Wird die erfindungsgemäße Dichtungskomponente gedruckt, also durch ein generatives Herstellungsverfahren gefertigt, ist sie insbesondere für einen Revisionsfall schnell verfügbar. Es müssen keine konventionellen U-Ringe beschafft beziehungsweise gelagert werden. Ein weiterer Vorteil besteht darin, dass die erfindungsgemäße Dichtungskomponente gezielt an die jeweiligen Kammermaße angepasst werden kann, so dass ein Übermaß nicht erforderlich ist und eine damit einhergehende Anpassungsbearbeitung entfällt. Ein weiterer Vorteil der generativen Herstellung besteht darin, dass Druckausgleichsbohrungen flexibel in den Grundkörper und/oder in die Stützstruktur beim Druckprozess implementiert werden können. Dies kann besonders bei Verwendung von Nimonic-Werkstoffen die Bearbeitungszeit reduzieren.

Die erfindungsgemäße Dichtungskomponente kann als vollständiger Ring mit einem geschlossen ringförmigen Grundkörper und darin angeordneter Stützstruktur, oder in Form von einer Mehrzahl von zusammenzusetzenden Ringsegmenten, die jeweils einen ringsegmentförmigen Grundkörper mit darin angeordneter Stützstruktur umfassen, gedruckt werden. Eine Herstellung eines nicht geschlossenen Ringes sondern einer Vielzahl von Ringsegmenten kann einerseits zweckmäßig sein, wenn die gewünschte, beziehungsweise erforderliche Dimensionierung des (gesamten) Ringes den zur Verfügung stehenden Druck- beziehungsweise Bearbeitungsraum für das generative Herstellen überschreitet. Unabhängig von der Herstellung durch ein generatives Verfahren kann eine Segmentierung auch aus Montagegründen zweckmäßig sein.

Eine besonders bevorzugte Ausführungsform der erfindungsgemäßen Dichtungskomponente zeichnet sich dadurch aus, dass die Stützstruktur integral mit den beiden stirnseitigen Wandungen ausgebildet ist. Dies kann insbesondere erreicht werden, indem ein generatives Herstellungsverfahren, beispielsweise selektives Laserschmelzen, zur Herstellung der erfindungsgemä-ßen Dichtungskomponente zum Einsatz kommt.

Die Stützstruktur kann weiterhin rotationssymmetrisch in Bezug auf die Rotationsachse des wenigstens einen ring- oder ringsegmentförmigen Grundkörpers sein.

Eine weitere Ausführungsform zeichnet sich dadurch aus, dass die Stützstruktur derart ausgebildet ist, dass ihre Steifigkeit in axialer Richtung variiert. Insbesondere kann die Steifigkeit zumindest abschnittsweise von einer stirnseitigen Wandung aus gesehen in Richtung der anderen stirnseitigen Wandung zunehmen. Alternativ oder zusätzlich kann die Stützstruktur auch derart ausgebildet sein, dass ihre Steifigkeit in Umfangsrichtung des Grundkörpers variiert und/oder dass ihre Steifigkeit in radialer Richtung variiert. Beispielsweise kann die Steifigkeit zumindest abschnittsweise in Umfangsrichtung und/oder radialer Richtung zu- oder abnehmen.

Ein wesentlicher Vorteil der erfindungsgemäßen Dichtungskomponente liegt darin, dass deren Bewegungsfreiheit über eine in eine oder mehrere Richtungen variierende Steifigkeit der Stützstruktur flexibel insbesondere an das Verformungsverhalten der Anlageufer angepasst werden kann. In Bereichen, in denen große Verformungen der Anlageufer zu erwarten sind, beziehungsweise erfahrungsgemäß stattfinden, und ein konventioneller U-Ring dem damit verbundenen lokalen Versatz nicht folgen kann, ist es bei der erfindungsgemäßen Dichtungskomponente möglich, diese gezielt in den betroffenen Bereichen flexibler, verformbarer auszulegen. Durch die flexible Gestaltung der erfindungsgemäßen Dichtungskomponente wird das Risiko von Leckagen auch bei langer Betriebszeit reduziert, was vor allem in Anbetracht immer längerer Revisionsintervalle von großem Vorteil ist. Eine insbesondere lokal begrenzte bessere Verformbarkeit kann mit einer lokal begrenzten geringeren Steifigkeit der Stützstruktur erzielt werden.

In Weiterbildung kann ferner vorgesehen sein, dass wenigstens eine stirnseitige Wandung des Grundkörpers eben ausgebildet ist, bevorzugt beide stirnseitigen Wandungen eben ausgebildet sind.

Zusätzlich dazu, dass in den Grundkörper der erfindungsgemäßen Dichtungskomponente eine Stützstruktur angeordnet ist, kann ferner vorgesehen sein, dass die Wandstärke wenigstens einer stirnseitigen Wandung des Grundkörpers in radialer Richtung und/oder in Umfangsrichtung des Grundkörpers variiert. Über eine variable Wandungsstärke kann alternativ oder zusätzlich eine besonders zuverlässige Dichtwirkung der erfindungsgemäßen Dichtungskomponente erzielt werden, da die stirnseitige(n) Wandung(en) bei Nennbetrieb und Druck einer größeren Uferverschiebung folgen können.

Als Materialien für den Grundkörper und - sofern vorhanden - die Stützstruktur haben sich nickelbasierte Stahllegierungen, insbesondere nickelbasierte Hochtemperaturstahllegierungen oder hochlegierte Stähle mit Chrom und Nickel bewährt. Als Beispiel für eine Nickel-basierte Hochtemperatur-Superlegierungen seien diejenigen genannt, die unter dem Markennamen Nimonic bekannt sind und als Beispiel für einen hochlegierten Stahl mit Chrom und Nickel X₁₂CrNi₁₈₋₈. Generell sind insbesondere je nach Einsatztemperatur auch andere Werkstoffe denkbar.

Was die Wandstärken von den stirnseitigen Wandungen und/oder der Mantelwandung angeht, liegen diese bevorzugt im Bereich von 0,1 bis 7 mm, besonders bevorzugt im Bereich 0,1 mm bis 5 mm. Andere Werte sind jedoch nicht ausgeschlossen.

Was die Wandstärke bzw. Wandstärken der Stützstruktur angeht, beispielsweise von zylinderrohrförmigen Stützelementen dieser und/oder von Wandungen einer waben- oder gitterförmigen Stützstruktur, kann sich diese insbesondere im Bereich von 0,1 bis 3 mm bewegen.

Insbesondere für den Fall, dass eine erfindungsgemäße Dichtungskomponente in einer Dampf-Turbine zum Einsatz kommt, hat es sich, was die Dimensionierung des Grundkörpers angeht als zweckmäßig erwiesen, wenn dessen Außendurchmesser bis zu etwa 1800 mm und/oder dessen axiale Ausdehnung, also dessen Breite bis zu etwa 50 mm und/oder dessen Höhe, die - bei eben ausgebildeten Mantelwandung und radialer Orientierung der stirnseitigen Wandungen - mit der Länge der stirnseitigen Wandungen im Querschnitt zusammenfällt, bis etwa 100 mm beträgt.

Diese Dimensionierungen sind beispielhaft zu verstehen und andere Werte somit nicht ausgeschlossen.

Eine weitere Ausführungsform der erfindungsgemäßen Dichtungskomponente zeichnet sich dadurch aus, dass in wenigstens einer der beiden stirnseitigen Wandungen und/oder in der Mantelwandung zumindest eine Durchgangsbohrung vorgesehen ist. Die Durchgangsbohrung(en) dient/dienen dann insbesondere als Druckausgleichsbohrung(en) .

Gemäß einer weiteren besonders bevorzugten Ausführungsform ist vorgesehen, dass sich die Mantelwandung durch einen wellenförmigen Querschnitt auszeichnet. Eine wellige Oberflächenstruktur der Mantelwandung bietet insbesondere bei einer Vorspannung der erfindungsgemäßen Dichtungskomponente eine größere Deformationsfreiheit als eine glatte (steifere) Oberfläche. Unabhängig von dem Fall der Vorspannung wird auch der Dichteffekt in axialer Richtung in Betrieb dadurch erhöht, dass eine größere Flexibilität der Mantelwandung bereitsteht, da sich die stirnseitigen Wandungen mehr bewegen und somit besser auch größeren Verformungen der Anlageufer folgen können.

In Weiterbildung kann ferner vorgesehen sein, dass an wenigstens einer, bevorzugt an beiden stirnseitigen Wandungen außenseitig eine sich in Umfangsrichtung und insbesondere über den gesamten Umfang des Grundkörpers erstreckende Dichtlippe vorgesehen ist. Durch eine beziehungsweise zwei stirnseitige Dichtlippen kann die Dichtungswirkung der erfindungsgemäßen Dichtungskomponente noch weiter begünstigt werden.

Ein weiterer Gegenstand der vorliegenden Erfindung ist die Verwendung wenigstens einer erfindungsgemäßen Dichtungskomponente zur Abdichtung eines Dampfraumes, in dem ein Dampfdruck vorherrscht, gegenüber einem weiteren Dampfraum, in dem ein von dem Dampfdruck verschiedener weiterer Dampfdruck vorherrscht, oder gegenüber einem Raum mit Umgebungsdruck. Rein beispielhaft seien Ventile, Dampfturbinen, Kessel und Druckbehälter als Einsatzorte genannt, in denen mit einer erfindungsgemäßen Dichtungskomponente zwei Dampfräume gegeneinander bzw. ein Dampfraum gegenüber der Umgebung abgedichtet werden können. Andere Einsatzorte sind jedoch nicht ausgeschlossen.

Die erfindungsgemäße Verwendung ist bevorzugt derart, dass die außenseitigen Flächen des Grundkörpers dem kleineren und die innenseitigen Flächen des Grundkörpers dem größeren Druck der beiden Räume ausgesetzt sind. Erfolgt die Verwendung auf diese Weise, wird der Grundkörper, durch den innenliegend größeren Druck "aufgebläht" und es kann eine besonderes gute Dichtwirkung erhalten werden.

Weitere Merkmale und Vorteile der vorliegenden Erfindung werden anhand der nachfolgenden Beschreibung dreier Ausführungsformen der erfindungsgemäßen Dichtungskomponente unter Bezugnahme auf die beiliegende Zeichnung deutlich. Darin sind
Figur 1 ein Teilschnitt durch ein mittels eines konventionellen U-Ringes abgedichteten Ventils;
Figur 2 eine perspektivische Ansicht einer ersten Ausführungsform einer erfindungsgemäßen Dichtungskomponente mit einer Stützstruktur mit rohrförmigen Stützelementen;
Figur 3 eine vergrößerte perspektivische Teilansicht der erfindungsgemäßen Dichtungskomponente aus Figur 2, wobei die vordere stirnseitige Wandung transparent dargestellt ist;
Figur 4 eine weitere vergrößerte perspektivische Teilansicht der erfindungsgemäßen Dichtungskomponente aus Figur 2,
Figur 5 einen Querschnitt durch die erfindungsgemäße Dichtungskomponente aus Figur 2 in schematischer Darstellung;
Figur 6 einen Querschnitt durch eine zweite Ausführungsform einer Dichtungskomponente, die eine gitterförmige Stützstruktur aufweist, aber nicht erfindungsgemäß ist; und
Figur 7 einen Querschnitt durch eine dritte Ausführungsform einer Dichtungskomponente, die eine wabenförmige Stützstruktur aufweist, aber nicht erfindungsgemäß ist.

Die eingangs bereits erwähnte Figur 1 zeigt einen Metallring 3 mit U-förmigem Querschnitt, der in der Anmelderin bekannter Weise z.B. zum Abdichten des Innenraums eines von einem Deckel 2 verschlossenen Ventilgehäuses 1 gegenüber der Umgebung zum Einsatz kommt. Er zeichnet sich durch eine Wandstärke von etwa 5 mm aus.

Der geschmiedete U-Ring 3 hat eine vergleichsweise lange Lieferzeit und muss über qualifizierte Lieferanten beschafft werden. Er wurde mit Übermaß bereitgestellt und durch nachträgliche mechanische Bearbeitung in seinen Außenmaßen an den zwischen dem Ventilgehäuse 1 und Deckel 2 definierten Zwischenraum für dessen Aufnahme angepasst. Mit diesem können ferner lokale Leckagen im Bereich von nicht gleichmäßig über den Umfang des Metallrings 3 auftretenden Kriechverformungen der Anlageufer 4, 5 an Deckel 2 und Gehäuse 1 verbunden sein.

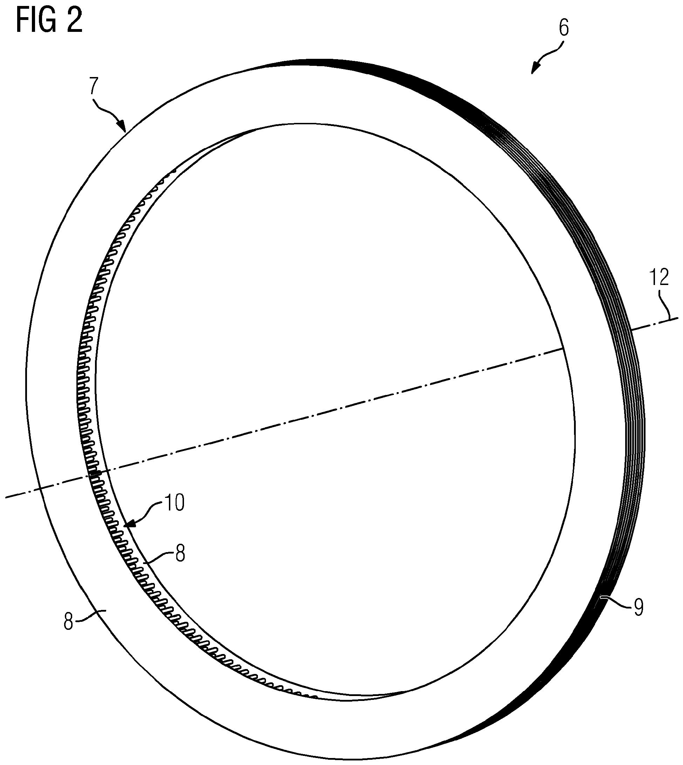

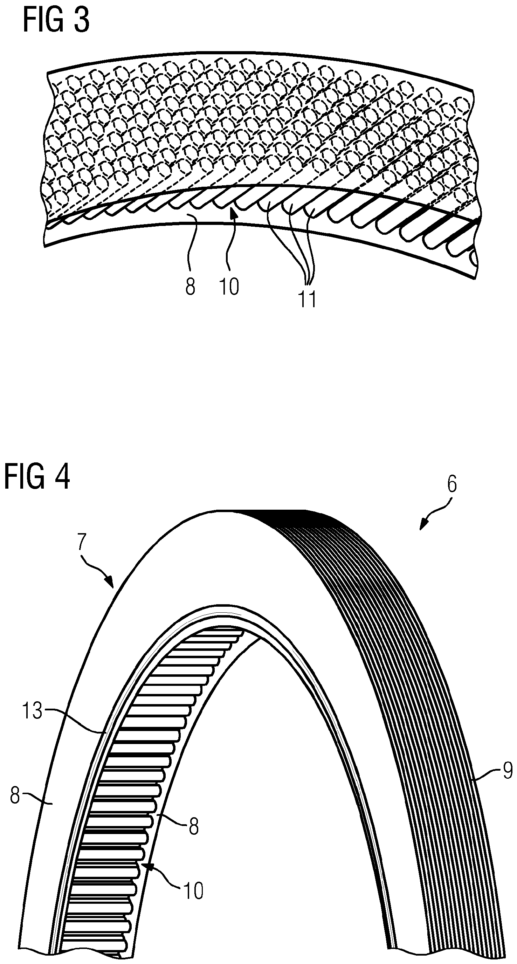

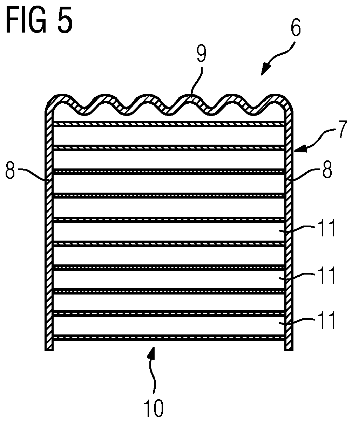

Mit der erfindungsgemäßen Dichtungskomponente 6 werden diese Nachteile zuverlässig vermieden. Eine erste Ausführungsform einer solchen ist perspektivisch in Figur 2 dargestellt. Die Figuren 3 und 4 zeigen vergrößerte perspektivische Teilansichten dieser Dichtungskomponente 6 und in der Figur 5 ist ein Querschnitt durch diese schematisch dargestellt. Die Dichtungskomponente 6 umfasst einen ringförmigen und im Querschnitt im Wesentlichen U-förmigen Grundkörper 7, der zwei stirnseitige Wandungen 8 und eine die beiden stirnseitigen Wandungen 8 verbindende Mantelwandung 9 umfasst. Die Querschnittsform des Grundkörpers 7 kann insbesondere der Figur 5 entnommen werden, die einen Querschnitt durch den Grundkörper 7 im Bereich einer Hälfte der Dichtungskomponente 6 zeigt.

Der Außendurchmesser des ringförmigen Grundkörpers 7 beträgt bei dem dargestellten Ausführungsbeispiel etwa 250 mm und der Innendurchmesser etwa 190 mm. Die axiale Ausdehnung des Grundkörpers, also dessen Breite beläuft sich auf etwa 20 mm und die radiale Ausdehnung im Querschnitt, also die Höhe auf etwa 30 mm. Die beiden stirnseitigen Wandungen 8 sind eben ausgebildet und haben eine gleichbleibende Wandstärke von etwa 1 mm. Wie insbesondere der Figur 5 entnommen werden kann, ist die Mantelwandung 9 bei dem dargestellten Ausführungsbeispiel im Querschnitt wellenförmig ausgebildet. Die Wandstärke der gewellten Mantelwandung 9 beläuft sich ebenfalls auf etwa 1 mm. Andere Werte sind natürlich nicht ausgeschlossen.

Innerhalb des von den beiden stirnseitigen Wandungen 8 und der Mantelwandung 9 gebildeten Grundkörpers 7 ist erfindungsgemäß eine Stützstruktur 10 vorgesehen.

Bei dem dargestellten Ausführungsbeispiel wird die Stützstruktur 10 durch eine Vielzahl von in dem Grundkörper 7 angeordneten, sich in axialer Richtung und parallel zueinander erstreckenden rohrförmigen Stützelementen 11 gebildet. Unter axialer Richtung ist dabei eine mit der Rotationsachse 12 des ringförmigen Grundkörpers 7 zusammenfallende Richtung zu verstehen. Die Wandstärke der rohrförmigen Stützelemente 11 beläuft sich vorliegend auf etwa 0,7 mm.

Wie in den Figuren erkennbar, ist das eine axiale Ende jedes Stützelementes 11 mit der einen stirnseitigen Wandung 8 und das jeweils andere axiale Ende mit der anderen stirnseitigen Wandung 8 des Grundkörpers 7 verbunden. Dabei sind die Verbindungen von Stützelementen 11 und stirnseitigen Wandungen 8 integral. Das bedeutet, der Grundkörper 7 und die darin vorgesehene Stützstruktur 10 bilden eine einteilige Komponente.

Die Stützstruktur kann individuell anhand der Wandstärke und/oder des Neigungswinkels angepasst werden. Der Neigungswinkel ist durch die Orientierung der Stützelemente 11 und die stirnseitigen Wandungen 8 definiert. Bei dem dargestellten Ausführungsbeispiel sind die Stützelemente 11, wie in den Figuren erkennbar, orthogonal zu den beiden parallelen stirnseitigen Wandungen 8 orientiert. Alternativ hierzu können die Stützelemente auch schräg durch den Grundkörper 7 verlaufen, also nicht orthogonal zu den beiden stirnseitigen Wandungen 8 orientiert sein. Über eine Variation des Winkels der Stützelemente 11 kann ebenfalls die Steifigkeit beeinflusst werden.

Die integrale Ausbildung von Grundkörper 7 und Stützstruktur 10 ist darauf zurückzuführen, dass die erfindungsgemäße Dichtungskomponente 7 durch selektives Laserschmelzen aus dem Pulverbett hergestellt wurde. Dabei wurden der Grundkörper 7 und die Stützstruktur 10 gemeinsam in Schichten aufgebaut. Das Pulverbett umfasste dabei ein Metallpulver aus einem hochlegierten Stahl mit Chrom und Nickel, konkret X₁₂CrNi₁₈₋₈ oder auch aus einem anderen geeigneten Werkstoff. Entsprechend bestehen sowohl der Grundkörper 7, also die stirnseitigen Wandungen 8 und die wellige Mantelwandung 9 als auch sämtliche die Stützstruktur 10 bildende rohrförmige Stützelemente 11 aus dieser Legierung.

An beiden stirnseitigen Wandungen 8 ist ferner außenseitig eine umlaufende, sich über den gesamten Umfang des Grundkörpers 7 erstreckende Dichtlippe 13 vorgesehen, die ebenfalls im Rahmen des selektiven Laserschmelzens aus dem Pulverbett zur Herstellung der Dichtungskomponente 7 gebildet wurde. Die Dichtlippen 13 sind nur in der Figur 4 dargestellt, wobei nur diejenige Dichtlippe 13 zu erkennen ist, die sich auf der in der Figur 4 nach vorne weisenden stirnseitigen Wandung 8 erstreckt. An der anderen, in Figur 4 nach hinten weisenden stirnseitigen Wandung 8 des Grundkörpers 7 ist eine identische Dichtlippe 13 vorgesehen. Die beiden Dichtlippen 13 erstrecken sich, wie in der Figur 4 erkennbar, nahe des Innenumfangs der stirnseitigen Wandungen 8, weisen also einen Durchmesser auf, der dessen Innendurchmesser nur geringfügig überschreitet.

Da die Dichtungskomponente 6 erfindungsgemäß eine in dem Grundkörper 7 angeordnete Stützstruktur 10 aufweist, welche die tragenden Eigenschaften des Dichtungselementes 6 übernimmt, können die stirnseitigen Wandungen 8 und die Mantelwandung 9 eine deutlich geringere Wandungsstärke aufweisen als der U-Ring 3 aus Figur 1. Wird anstelle des U-Rings 3 die erfindungsgemäße Dichtungskomponente 6 wie in Figur 1 dargestellt in einem Ventil eingesetzt, um den Innenraum des Gehäuses 1 gegenüber der Umgebung mit geringerem Druck abzudichten, können die stirnseitigen Wandungen 8 des Grundkörpers 7 daher viel flexibler auch großen Kriechverformungen im Bereich der Anlageufer 4, 5 an Deckel 2 und Gehäuse 1 folgen. Da im Betrieb der vergleichsweise dünnwandige Grundkörper 7 innenseitig einem größeren Druck ausgesetzt ist als außenseitig, "bläht" er sich auf, wodurch eine besonders zuverlässige Dichtungswirkung erzielt wird. Die wellenförmige Ausgestaltung der Mantelwandung 9 begünstigt dabei eine Verformung aufgrund des innen höheren Druckes, da die Wellenform eine größere Deformationsfreiheit als eine glatte, steifere Wandung bietet.

Da die erfindungsgemäße Dichtungskomponente durch Drucken, konkret selektives Laserschmelzen aus dem Pulverbett gefertigt wurde, ist sie - insbesondere im Revisionsfall - schnell verfügbar und muss nicht lange vorgehalten werden. Es kann ferner direkt eine erforderliche Zielgeometrie erhalten werden. Eine nachträgliche mechanische Bearbeitung, wie sie bei einem geschmiedeten Teil mit Übermaß erforderlich ist, entfällt. Infolge der Herstellung durch ein generatives Verfahren besteht ferner größtmögliche Flexibilität, was die konkrete Ausgestaltung sowohl der Stützstruktur 10 als auch des Grundkörpers 7 angeht.

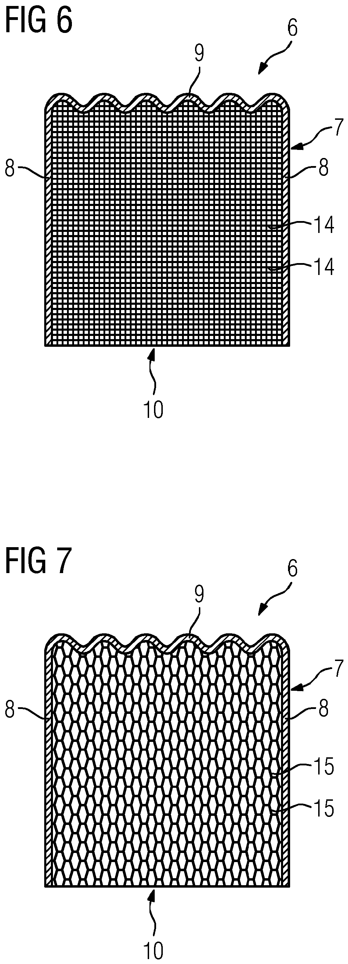

In den Figuren 6 und 7 sind zwei weitere Ausführungsformen einer nicht erfindungsgemäßen Dichtungskomponente 6 dargestellt, wobei - wie in der Figur 5 für das erste Ausführungsbeispiel - ein Querschnitt durch die Dichtungskomponente 6 im Bereich einer Hälfte gezeigt ist. Die beiden weiteren Ausführungsformen unterscheiden sich von derjenigen aus den Figuren 1 bis 5 alleine durch eine anders ausgestaltete Stützstruktur 10. Gleiche Komponenten sind mit gleichen Bezugszeichen versehen.

Konkret ist bei der in Figur 6 dargestellten zweiten Ausführungsform eine gitterförmige Stützstruktur 10 in dem Grundkörper 7 vorgesehen. In Umfangsrichtung ist die Stützstruktur 10 rotationssymmetrisch in Bezug auf die Rotationsachse 12 des Grundkörpers 7. Bei dem dargestellten Ausführungsbeispiel sind die Gitterwandungen 14 der Stützstruktur 10 parallel bzw. orthogonal zu den stirnseitigen Wandungen 8 orientiert. Andere Orientierungen, die nicht parallel oder orthogonal zu den stirnseitigen Wandungen 8 und/oder zueinander verlaufende Gitterwandungen 14 umfassen, sind ebenfalls möglich.

Bei der dritten Ausführungsform gemäß Figur 7 ist eine wabenförmige, in Umfangsrichtung ebenfalls in Bezug auf die Achse 12 rotationssymmetrische Stützstruktur 10 in dem Grundkörper 7 vorgesehen. Auch hinsichtlich der Wabenwandungen 15 dieser Stützstruktur 10 gilt, dass eine andere als die dargestellte Orientierung möglich ist.

Was die Vorteile der zweiten und dritten Ausführungsform angeht, gilt das gleiche, was vorstehend für die erste in den Figuren 1 bis 5 dargestellte Ausführungsform dargelegt wurde.

In Abweichung von den hier beschriebenen drei Ausführungsbeispielen, die sich durch Stützstrukturen 10 auszeichnen, deren lokale Steifigkeit sich weder in axialer noch in radialer noch in Umfangsrichtung ändert, kann gezielt eine in eine oder mehrere dieser Richtungen veränderliche Steifigkeit, also eine veränderliche Flexibilität vorgesehen werden. Beispielsweise kann, wenn mit einer besonders starken Kriechverformung der Anlageufer 4, 5 in deren radial weiter außen liegenden Bereichen zu rechnen ist, die Steifigkeit der Stützstruktur 10 dort gezielt geringer und somit die Bewegungsfreiheit der stirnseitigen Wandungen 8 dort gezielt höher ausgelegt werden. Dies kann beispielsweise durch eine geringere Wandstärke der rohrförmigen Stützelemente 11 bzw. Gitterwandungen 14 bzw. Wabenwandungen 15 im radial weiter außen liegenden Bereich der jeweiligen Stützstruktur 10 erreicht werden. Auch ist es möglich, dass alterativ zu den vorstehend beschriebenen drei Ausführungsbeispielen die Dichtungskomponente nicht einteilig ausgebildet ist sondern eine Vielzahl von Segmenten umfasst, die jeweils einen Ringsegment-förmigen Grundkörper mit darin angeordneter Stützstruktur aufweisen und insbesondere zu einem geschlossenen Ring zusammengesetzt eine Dichtungsanordnung für den Zwischenraum zwischen Ventilgehäuse 1 und Deckel 2 bilden.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen. Der Schutzumfang ist nur durch die beigefügten Ansprüche begrenzt.

## Patentansprüche

1. Dichtungskomponente (6), insbesondere zur Abdichtung eines Dampfraumes gegenüber der Umgebung oder zweier Dampfräume mit unterschiedlichen Drücken, umfassend zumindest einen ring- oder ringsegmentförmigen, im Querschnitt zumindest im Wesentlichen U-förmigen Grundkörper (7), der zwei stirnseitige Wandungen (8) und eine die beiden stirnseitigen Wandungen (8) verbindende Mantelwandung (9) aufweist, wobei innerhalb des Grundkörpers (7) eine Stützstruktur (10) vorgesehen ist, welche die beiden stirnseitigen Wandungen (8) miteinander verbindet, **dadurch gekennzeichnet, dass** die Stützstruktur (10) eine Vielzahl von zylinderförmigen Stützelementen und/oder rohrförmigen Stützelementen (11) umfasst, und das eine axiale Ende jedes zylinder- oder rohrförmigen Stützelementes (11) mit der einen stirnseitigen Wandung (8) und das andere axiale Ende jedes zylinder- oder rohrförmigen Stützelementes (11) mit der anderen stirnseitigen Wandung (8) integral verbunden ist, wobei die Stützstruktur (10) waben- oder gitterförmig ausgebildet ist.

2. Dichtungskomponente (6) nach Anspruch 1, **dadurch gekennzeichnet, dass** die Stützstruktur (10) integral mit den beiden stirnseitigen Wandungen (8) ausgebildet ist.

3. Dichtungskomponente (6) nach einem der vorhergehenden Ansprüche, **dadurch gekennzeichnet, dass** die zylinderförmigen Stützelementen und/oder rohrförmigen Stützelementen (11) parallel sind.

4. Dichtungskomponente (6) nach einem der vorhergehenden Ansprüche, **dadurch gekennzeichnet, dass** die Stützstruktur (10) rotationssymmetrisch in Bezug auf die Rotationsachse (12) des Grundkörpers (12) ist.

5. Dichtungskomponente (6) nach einem der vorhergehenden Ansprüche, **dadurch gekennzeichnet, dass** die Stützstruktur (10) derart ausgebildet ist, dass ihre Steifigkeit in axialer Richtung variiert, und/oder dass die Stützstruktur (10) derart ausgebildet ist, dass ihre Steifigkeit in radialer Richtung variiert und/oder dass die Stützstruktur (10) derart ausgebildet ist, dass ihre Steifigkeit in Umfangsrichtung variiert.

6. Dichtungskomponente (6) nach einem der vorhergehenden Ansprüche, **dadurch gekennzeichnet, dass** wenigstens eine stirnseitige Wandung (8) eben ausgebildet ist, bevorzugt beide stirnseitigen Wandungen (8) eben ausgebildet sind.

7. Dichtungskomponente (6),
insbesondere für eine Strömungsmaschine,
nach einem der Ansprüche 1 bis 6,
umfassend einen ring- oder ringsegmentförmigen, im Querschnitt zumindest im Wesentlichen U-förmigen Grundkörper (7), der zwei stirnseitige Wandungen (8) und eine die beiden stirnseitigen Wandungen (8) verbindende Mantelwandung (9) aufweist,
wobei die Wandstärke wenigstens einer stirnseitigen Wandung (8) in radialer Richtung und/oder in Umfangsrichtung variiert.

8. Dichtungskomponente (6) nach einem der vorhergehenden Ansprüche, **dadurch gekennzeichnet, dass** der Grundkörper (7) und insbesondere die Stützstruktur (10) durch ein generatives Fertigungsverfahren, insbesondere durch selektives Laserschmelzen, bevorzugt aus dem Pulverbett, hergestellt wurden.

9. Dichtungskomponente (6) nach einem der vorhergehenden Ansprüche, **dadurch gekennzeichnet, dass** der Grundkörper (7) und insbesondere die Stützstruktur (10) aus einer nickel-basierten Stahllegierung, insbesondere einer nickel-basierten Hochtemperatur-Stahllegierung, oder aus einem mit Chrom und Nickel hochlegierten Stahl bestehen.

10. Dichtungskomponente (6) nach einem der vorhergehenden Ansprüche, **dadurch gekennzeichnet, dass** die Wandstärke wenigstens einer, bevorzugt beider stirnseitigen Wandungen (8) und/oder der Mantelwandung (9) im Bereich von 0,1 bis 7 mm, bevorzugt im Bereich von 0,1 bis 5 mm liegt.

11. Dichtungskomponente (6) nach einem der vorhergehenden Ansprüche, **dadurch gekennzeichnet, dass** in wenigstens einer der beiden stirnseitigen Wandungen (8) und/oder in der Mantelwandung (9) wenigstens eine Durchgangsbohrung vorgesehen ist.

12. Dichtungskomponente (6) nach einem der vorhergehenden Ansprüche, **dadurch gekennzeichnet, dass** sich die Mantelwandung (9) durch einen wellenförmigen Querschnitt auszeichnet.

13. Dichtungskomponente (6) nach einem der vorhergehenden Ansprüche, **dadurch gekennzeichnet, dass** an wenigstens einer, bevorzugt an beiden stirnseitigen Wandungen (8) außenseitig eine sich in Umfangsrichtung und insbesondere über den gesamten Umfang des Grundkörpers (7) erstreckende Dichtlippe (13) vorgesehen ist.

14. Verwendung wenigstens einer Dichtungskomponente (6) nach einem der vorhergehenden Ansprüche zur Abdichtung eines Dampfraumes, in dem ein Dampfdruck vorherrscht, gegenüber einem weiteren Dampfraum, in dem ein von dem Dampfdruck verschiedener weiterer Dampfdruck vorherrscht, oder gegenüber einem Raum mit Umgebungsdruck, bevorzugt derart, dass die außenseitigen Flächen des Grundkörper (7) dem kleineren und die innenseitigen Flächen des Grundkörpers (7) dem größeren Druck ausgesetzt sind.

## Claims

1. Seal component (6), in particular for sealing off a vapour chamber with respect to the surroundings or two vapour chambers at different pressures, comprising at least one annular or ring-segment-shaped main body (7) which is at least substantially U-shaped in cross section and has two face-side walls (8) and a casing wall (9) connecting the two face-side walls (8), wherein, within the main body (7), there is provided a support structure (10) which connects the two face-side walls (8) to one another, **characterized in that** the support structure (10) comprises a multiplicity of cylindrical support elements and/or of tubular support elements (11), and one axial end of each cylindrical or tubular support element (11) is connected integrally to one face-side wall (8) and the other axial end of each cylindrical or tubular support element (11) is connected integrally to the other face-side wall (8), wherein the support structure (10) is of honeycomb-shaped or lattice-like form.

2. Seal component (6) according to Claim 1, **characterized in that** the support structure (10) is formed integrally with the two face-side walls (8).

3. Seal component (6) according to either of the preceding claims, **characterized in that** the cylindrical support elements and/or tubular support elements (11) are parallel.

4. Seal component (6) according to one of the preceding claims, **characterized in that** the support structure (10) is rotationally symmetrical in relation to the axis of rotation (12) of the main body (12).

5. Seal component (6) according to one of the preceding claims, **characterized in that** the support structure (10) is designed in such a way that the stiffness thereof varies axially, and/or **in that** the support structure (10) is designed in such a way that the stiffness thereof varies radially, and/or **in that** the support structure (10) is designed in such a way that the stiffness thereof varies circumferentially.

6. Seal component (6) according to one of the preceding claims, **characterized in that** at least one face-side wall (8) is of planar form, and preferably both face-side walls (8) are of planar form.

7. Seal component (6),
in particular for a turbomachine,
according to one of Claims 1 to 6,
comprising an annular or ring-segment-shaped main body (7) which is at least substantially U-shaped in cross section and has two face-side walls (8) and a casing wall (9) connecting the two face-side walls (8),
wherein the wall thickness of at least one face-side wall (8) varies radially and/or circumferentially.

8. Seal component (6) according to one of the preceding claims, **characterized in that** the main body (7) and in particular the support structure (10) have been produced by a generative manufacturing process, in particular by selective laser melting, preferably from the powder bed.

9. Seal component (6) according to one of the preceding claims, **characterized in that** the main body (7) and in particular the support structure (10) consist of a nickel-based steel alloy, in particular a nickel-based high-temperature steel alloy, or of a steel which is highly alloyed with chromium and nickel.

10. Seal component (6) according to one of the preceding claims, **characterized in that** the wall thickness of at least one, preferably both face-side walls (8) and/or of the casing wall (9) lies in the range from 0.1 to 7 mm, preferably in the range from 0.1 to 5 mm.

11. Seal component (6) according to one of the preceding claims, **characterized in that** at least one through-bore is provided in at least one of the two face-side walls (8) and/or in the casing wall (9).

12. Seal component (6) according to one of the preceding claims, **characterized in that** the casing wall (9) is distinguished by an undulating cross section.

13. Seal component (6) according to one of the preceding claims, **characterized in that** a sealing lip (13) extending circumferentially and in particular over the entire circumference of the main body (7) is provided externally on at least one, preferably on both face-side walls (8).

14. Use of at least one sealing component (6) according to one of the preceding claims for sealing off a vapour chamber, in which a vapour pressure prevails, with respect to a further vapour chamber, in which a further vapour pressure, different from the vapour pressure, prevails, or with respect to a space at ambient pressure, preferably in such a way that the outer surfaces of the main body (7) are subjected to the lower pressure and the inner surfaces of the main body (7) are subjected to the higher pressure.

## Revendications

1. Composant (6) d'étanchéité, notamment pour rendre étanche un espace réservé à de la vapeur par rapport à ce qui l'entoure ou deux espaces réservés à de la vapeur ayant des pressions différentes, comprenant au moins un corps (7) de base annulaire ou en forme de segment d'anneau, en section transversale au moins sensiblement en forme de U, qui a deux parois (8) du côté frontal et une paroi (9) latérale reliant les deux parois (8) du côté frontal, dans lequel il est prévu, à l'intérieur du corps (7) de base, une structure (10) d'appui, qui relie entre elles les deux parois (8) du côté frontal, **caractérisé en ce que** la structure (10) d'appui comprend une pluralité d'éléments d'appui de forme cylindrique et/ou d'éléments (11) d'appui de forme tubulaire et l'un des bouts axiaux de chaque élément (11) d'appui de forme cylindrique ou tubulaire est relié intégralement à l'une des parois (8) du côté frontal et l'autre bout axial de chaque élément (11) cylindrique ou tubulaire est relié intégralement à l'autre paroi (8) du côté frontal, dans lequel la structure (10) d'appui est constituée sous la forme d'un nid d'abeille ou d'une grille.

2. Composant (6) d'étanchéité suivant la revendication 1, **caractérisé en ce que** la structure (10) d'appui est constituée intégralement avec les deux parois (8) du côté frontal.

3. Composant (6) d'étanchéité suivant l'une des revendications précédentes, **caractérisé en ce que** les éléments d'appui de forme cylindrique et/ou les éléments (11) d'appui de forme tubulaire sont parallèles.

4. Composant (6) d'étanchéité suivant l'une des revendications précédentes, **caractérisé en ce que** la structure (10) d'appui est de révolution par rapport à l'axe (12) de révolution du corps (12) de base.

5. Composant (6) d'étanchéité suivant l'une des revendications précédentes, **caractérisé en ce que** la structure (10) d'appui est constituée de manière à ce que sa raideur varie dans la direction axiale, et/ou **en ce que** la structure (10) d'appui est constituée de manière à ce que sa raideur varie dans la direction radiale, et/ou **en ce que** la structure (10) est constituée de manière à ce que sa raideur varie dans la direction du pourtour.

6. Composant (6) d'étanchéité suivant l'une des revendications précédentes, **caractérisé en ce qu'**au moins une paroi (8) du côté frontal est constituée de manière plane, de préférence, les deux parois (8) du côté frontal sont constituées de manière plane.

7. Composant (6) d'étanchéité,
notamment pour une turbomachine,
suivant l'une des revendications 1 à 6,
comprenant un corps (7) de base annulaire ou en forme de segment d'anneau, en section transversale au moins sensiblement en forme de U, qui a deux parois (8) du côté frontal et une paroi (9) latérale reliant les deux parois (8) du côté frontal,
dans lequel l'épaisseur d'au moins une paroi (8) du côté frontal varie dans la direction radiale et/ou dans la direction du pourtour.

8. Composant (6) d'étanchéité suivant l'une des revendications précédentes, **caractérisé en ce que** le corps (7) de base et notamment la structure (10) d'appui ont été fabriqués par un procédé de fabrication génératif, notamment par fusion laser sélective, de préférence à partir du lit de poudre.

9. Composant (6) d'étanchéité suivant l'une des revendications précédentes, **caractérisé en ce que** le corps (7) de base et notamment la structure (10) d'appui sont en un alliage d'acier à base de nickel, notamment en un alliage d'acier à base de nickel résistant aux températures hautes ou en acier très allié au chrome et au nickel.

10. Composant (6) d'étanchéité suivant l'une des revendications précédentes, **caractérisé en ce que** l'épaisseur de paroi d'au moins l'une des deux parois (8) du côté frontal et/ou de la paroi (9) latérale est dans la plage de 0,1 à 7 mm, de préférence dans la plage allant de 0,1 à 5 mm.

11. Composant (6) d'étanchéité suivant l'une des revendications précédentes, **caractérisé en ce qu'**il est prévu au moins un trou traversant dans au moins l'une des deux parois (8) du côté frontal et/ou dans la paroi (9) latérale.

12. Composant (6) d'étanchéité suivant l'une des revendications précédentes, **caractérisé en ce que** la paroi (9) latérale se **caractérise par** une section transversale ondulée.

13. Composant (6) d'étanchéité suivant l'une des revendications précédentes, **caractérisé en ce qu'**il est prévu, sur au moins l'une, de préférence sur les deux parois (8) du côté frontal du côté extérieur, une lèvre (13) d'étanchéité s'étendant sur la direction du pourtour et notamment sur tout le pourtour du corps (7) de base.

14. Utilisation d'au moins un composant (6) d'étanchéité suivant l'une des revendications précédentes, pour rendre étanche un espace réservé à de la vapeur, dans lequel règne une pression de vapeur, par rapport à un autre espace réservé à de la vapeur, dans lequel règne une autre pression de vapeur, différente de la pression de la vapeur, ou par rapport à un espace sous la pression ambiante, de préférence de manière à ce que les surfaces du côté extérieur du corps (7) de base soient soumises à la pression la plus basse et une surface du côté intérieur du corps (7) de base à la pression la plus haute.
